# NOUVEAU FASCICULE DE BREVET EUROPEEN

(11) **EP 2 367 087 B2**
(45) Date de publication et mention de la décision concernant l'opposition: **02.12.2020**
(45) Mention de la délivrance du brevet: 24.05.2017
(21) Numéro de dépôt: 11158669.9
(22) Date de dépôt: 17.03.2011
(51) Int. Cl.: G05D 23/19

(54) **Procédé de contrôle d'une installation et installation adaptée a la mise en oeuvre de ce procédé**
Verfahren zum Kontroll einer Einrichtung und Einrichtung zur Durchführung dieses Verfahrens
Method of controlling a device and device adapted to carry out said method

(30) Priorité: 19.03.2010 FR 1051971
(43) Date de publication de la demande: 21.09.2011
(73) Titulaire: Thermor, 45140 Saint-Jean-de-la-Ruelle (FR)
(72) Inventeur: Le Gallo, Yann, 45100 Orleans (FR); Fourmentin, Dorian, 45000 Orleans (FR)
(74) Mandataire: Ipsilon

(56) Documents cités:
- EP-A1- 0 356 609
- EP-A1- 0 631 219
- EP-A1- 0 866 282
- EP-A2- 1 884 854
- WO-A2-2008/132573
- GB-A- 2 146 797
- JP-A- S61 110 840
- US-A- 4 522 333
- US-A- 4 620 667
- US-A- 5 626 287
- US-A1- 2007 267 508
- US-B1- 6 263 260

## Description

La présente invention concerne un procédé de contrôle d'une installation et une installation adaptée à la mise en oeuvre de ce procédé de contrôle. L'invention se rapporte notamment aux domaines du chauffage, de la ventilation, de la climatisation ou du chauffage de l'eau au moyen d'un chauffe-eau électrique ou thermodynamique.

Il est connu, dans le domaine du chauffage, d'adapter le fonctionnement d'un corps de chauffe d'une installation de chauffage électrique en fonction de la présence d'un utilisateur, déterminée au moyen d'un détecteur de présence de l'utilisateur. Une telle installation est par exemple décrite dans EP-A-1 884 854.

Si un utilisateur est détecté, l'installation est commandée en mode de fonctionnement de confort. Si aucun utilisateur n'est détecté, l'installation passe en mode de fonctionnement économique, pour réaliser des économies d'énergie. La détection peut se faire avec une temporisation associée. Le mode de fonctionnement confort correspond par exemple au chauffage à une température dite de confort, tandis que le mode de fonctionnement économique peut correspondre au chauffage à une température dite économique, inférieure à la température de confort.

L'inconvénient de ce type d'installations est de ne pas permettre de tenir compte de l'inertie de montée en température du corps de chauffe lors du passage du mode de fonctionnement économique au mode de fonctionnement de confort. L'utilisateur ressent ainsi un inconfort lié à cette inertie lors de son arrivée dans le local et durant tout le temps nécessaire au système pour passer en mode confort et pour chauffer la pièce.

US-B-6 263 260 décrit la commande d'une installation domestique par un logiciel qui fonctionne à partir de plusieurs algorithmes. Deux algorithmes sont combinés entre eux avec des paramètres extérieurs pour définir un troisième algorithme. Ce troisième algorithme est donc influencé par le retour d'expérience généré par les capteurs de présence et d'activité compris dans cette installation.

EP-A-0 631 219 divulgue la commande ainsi que la régulation d'une installation thermique à partir d'une règle. Cette règle est établie par l'installation elle-même et/ou par l'utilisateur. Cette règle correspond à l'emploi du temps de l'utilisateur qui est établi par l'analyse de ses habitudes sur plusieurs jours.

Le but de la présente invention est de fournir une installation, notamment une installation de chauffage électrique, ne présentant pas les inconvénients précités et un procédé de contrôle d'une telle installation.

Plus particulièrement, l'invention vise à améliorer le confort de l'utilisateur, ainsi que les économies d'énergies réalisées, tout en l'affranchissant de tout acte de programmation.

A cette fin, la présente invention propose un procédé conforme à la revendication 1.

Suivant des modes de réalisation préférés, l'invention comprend une ou plusieurs des caractéristiques suivantes :
- la loi de programmation commande le dispositif selon des modes de fonctionnement intermédiaires entre le mode actif et le mode de veille ;
- l'adaptation faite à la loi de programmation est fonction du nombre de cycles successifs pendant lesquels une même discordance a été déterminée ;
- la loi de programmation est fonction du jour de la semaine ;
- on détermine :
   - une loi unique pour tous les jours de la semaine du lundi au dimanche, ou
   - une loi de programmation unique mis en oeuvre tous les jours de la semaine du lundi au vendredi, et une ou deux lois de programmation pour le samedi et le dimanche ;
   - une loi de programmation distinctes pour tous les jours de la semaine du lundi au vendredi ; ou
   - une loi de programmation définie sur une semaine, un mois ou une année ;
- la modification de la loi de programmation vise à corriger la discordance pour un cycle futur, de préférence pour le cycle suivant le cycle où la discordance a été déterminée ;
- on détermine un intervalle de temps de présence, respectivement d'absence, d'un utilisateur, par :
   i) calcul du nombre de signaux, émis par le détecteur de présence, représentatifs de la présence d'un utilisateur durant une période de temps de durée prédéterminée ;
   ii) comparaison du nombre de signaux calculé à l'étape i) avec une valeur de seuil prédéterminée ;
   iii)réunion de périodes de temps successives correspondant à un même résultat de la comparaison de l'étape ii).

L'invention concerne également une installation conforme à la revendication 9.

De préférence, l'installation est choisie dans le groupe comprenant :
- une installation de chauffage, le dispositif étant un corps chauffant ;
- une installation de chauffe-eau, le dispositif étant un corps chauffant ou un compresseur de circulation d'un fluide frigorigène ;
- une installation de ventilation, le dispositif étant un ventilateur ou une bouche de ventilation ; et
- une installation de climatisation, le dispositif étant un climatiseur.

De préférence encore, l'installation comprend en outre une mémoire dans laquelle la loi de programmation est enregistrée.

D'autres caractéristiques et avantages de l'invention apparaîtront à la lecture de la description qui suit d'un mode de réalisation préféré de l'invention, donnée à titre d'exemple et en référence au dessin annexé.

La figure 1 représente un schéma bloc d'un exemple de radiateur électrique ;

Les figures 2 à 5 illustrent un exemple d'auto-apprentissage réalisé par un procédé de contrôle d'un chauffage électrique tel que représenté schématiquement à la figure 1.

Dans la suite, à fin de clarté, il est procédé à une description détaillée d'une installation de chauffage selon l'invention. Cependant, cette application de l'invention à une installation de chauffage ne doit pas être comprise comme limitative, l'invention trouvant de nombreux autres domaines d'application, comme il sera expliqué plus loin dans la description.

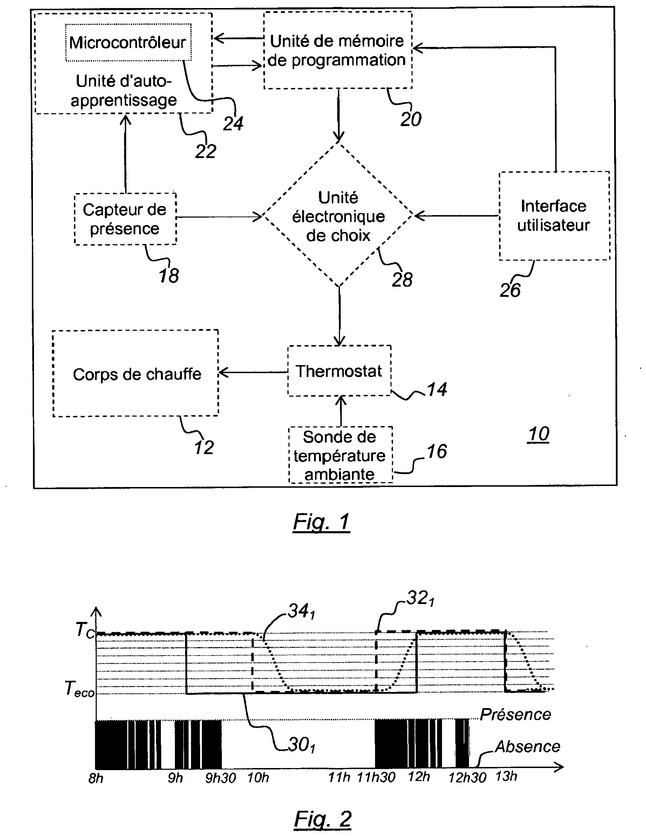

La figure 1 représente schématiquement un exemple de chauffage électrique 10.

Ce chauffage électrique 10 comporte tout d'abord au moins un corps de chauffe 12 commandé par un thermostat 14. Ce thermostat 14 est relié à une sonde 16 de mesure de la température ambiante. Ceci permet de réguler l'alimentation du corps de chauffe par le thermostat en boucle fermée, en fonction de la température ambiante mesurée.

Le chauffage électrique 10 comprend également un capteur de présence 18 pour détecter la présence ou l'absence d'un utilisateur, c'est-à-dire, en l'espèce, d'un occupant de la pièce dans laquelle le chauffage électrique est installé.

Le capteur de présence 18 peut également être déporté hors du chauffage électrique.

Le capteur de présence 18 peut prendre de nombreuses formes distinctes. Il peut s'agir d'un capteur de passage devant une cellule photoélectrique, d'un capteur de taux de CO₂ ou de composés organiques volatiles (COV), ces deux taux étant représentatifs de la présence d'un utilisateur dans la pièce. Il peut s'agir également d'un interrupteur d'un dispositif domestique, comme une lumière ou un appareil HI-FI, actionné par un utilisateur. Une caméra ou un capteur infrarouge peuvent également être mis en oeuvre en tant que capteur de présence. Plusieurs tels capteurs de présence peuvent également être couplés pour améliorer la précision de la détection d'un utilisateur.

Le chauffage électrique comporte aussi une unité de mémoire de programmation 20 sur laquelle est enregistrée au moins une loi de programmation du fonctionnement du corps de chauffe 12 du chauffage électrique.

Cependant, cette unité de mémoire de programmation peut également être comprise dans une unité d'auto-apprentissage 22 à laquelle l'unité de mémoire de programmation 20 est associée. L'unité d'auto-apprentissage 22 met en oeuvre un procédé qui sera décrit plus en détails dans la suite de la description. Cette unité d'auto-apprentissage 22 comporte notamment un microcontrôleur 24 pour modifier la ou les lois de programmation, enregistrées dans l'unité de mémoire de programmation 20, en fonction de signaux émis par le capteur de présence 18, comme il sera décrit ultérieurement.

Selon une variante, l'unité de mémoire, l'unité d'auto-apprentissage, l'interface et/ou le capteur de présence peuvent être déportés hors de l'installation, c'est-à-dire en l'espèce hors du chauffage électrique. Ces différents éléments peuvent alors être mis en oeuvre pour différents types d'installations. Par exemple, une même interface utilisateur peut être utilisée pour contrôler le chauffage électrique, une ventilation de la pièce et/ou un chauffe-eau.

Comme indiqué plus haut, l'unité de mémoire de programmation peut stocker une ou plusieurs lois de programmation, fixes ou modifiables. Chacune de ces lois est définie sur des intervalles de temps ou cycles, qui se répètent dans le temps. Ainsi, ces lois de programmation se répètent selon des schémas de répétition et chaque répétition d'une loi correspond à un cycle de cette loi. Pour définir une loi, le cycle, sur lequel cette loi est définie, est découpé en intervalles de temps, appelés « pas de programmation », qui sont de préférence tous égaux. Sur chacun de ces pas de programmation, la loi est associée à une valeur de consigne. Dans la suite, on considère des pas de programmation d'une durée de 15 minutes, à titre d'exemple illustratif et non limitatif. Bien entendu, plus la durée du pas est réduite et plus la programmation est précise. En contrepartie une plus grande quantité de données doit être enregistrée, si bien que le besoin en mémoire de stockage est plus important.

A titre d'exemple, une même loi peut être mise en oeuvre pour tous les jours de la semaine, du lundi au dimanche.

Une même loi peut également, selon une autre variante, être mise en oeuvre pour chaque jour de la semaine du lundi au vendredi, et une même loi ou deux lois distinctes pour les deux jours du week-end.

Il est également envisageable qu'une loi distincte soit mise en oeuvre pour chaque jour de la semaine, entre le lundi et le vendredi. Une même loi ou deux lois distinctes peuvent alors être mises en oeuvre pour le week-end.

En outre, les lois de programmation peuvent être définies sur des périodes de temps plus importantes, de l'ordre de la semaine, du mois ou de l'année, notamment.

D'autres configurations de nombres de lois de programmation et de schémas de répétition sont évidemment possibles.

Le chauffage électrique 10 comprend enfin un interface utilisateur 26 et une unité électronique de choix 28.

L'interface utilisateur 26 permet notamment à l'utilisateur de :
- définir une consigne de chauffage pour le thermostat ;
- déterminer parmi les différents modes de fonctionnement alternatifs possibles, lequel doit être mise en oeuvre ;
- modifier la loi de programmation enregistrée dans l'unité de mémoire de programmation ; et de
- modifier les paramètres de l'unité d'auto-apprentissage.

L'unité électronique de choix 28, pilotée par l'interface utilisateur 26, permet de donner une température de consigne au thermostat 14 :
- en fonction de la loi de programmation stockée dans l'unité de mémoire de programmation 20 ;
- en fonction d'une commande définie directement par un utilisateur au moyen de l'interface utilisateur ; ou
- en fonction de la détection de présence réalisée au moyen du capteur de présence 18.

Il est également possible de commander le thermostat 14 en fonction de la loi de programmation 20 en tenant compte en priorité de la présence d'un utilisateur, déterminée au moyen du capteur de présence. De la sorte, si la loi de programmation indique un fonctionnement économique, adapté à l'absence d'utilisateur dans la pièce, alors que la présence d'un utilisateur est détectée, l'unité de choix fournit une température de consigne dite de confort, adaptée à la présence d'un utilisateur.

Comme cela ressort de la figure 1, l'unité d'auto-apprentissage 22 fonctionne de façon indépendante du reste du chauffage électrique, tout comme le capteur de présence 18 et l'unité de mémoire de programmation 20.

L'utilisateur peut choisir entre un contrôle direct du thermostat, le contrôle par programmation, le contrôle par programmation et détecteur de présence, ou enfin la programmation avec auto-apprentissage et, éventuellement, détecteur de présence.

Dans le cas où l'utilisateur contrôle directement le thermostat, il choisit un mode et/ou une température de consigne, qui est suivie par le thermostat. Sans autre action de sa part, la température de consigne n'est pas modifiée.

On peut imaginer un mode de fonctionnement du chauffage électrique où celui-ci fonctionne uniquement selon les lois de programmation enregistrées, sans que celles-ci ne soient modifiées en fonction du capteur de présence. Dans ce cas, le mode de chauffage est lu dans la mémoire de programmation, qui contient des données de plages horaires et de modes de chauffage correspondant à ces plages horaires, découpées en pas de programmation comme expliqué plus haut. Les modes de chauffage correspondent par exemple à des températures et/ou de modes de chauffage de confort ou économique.

Dans le cas où la programmation est activée avec le détecteur de présence, le programmation est suivie par le thermostat, sauf dans le cas d'une discordance où le mode de chauffage effectivement détecté est inapproprié : il s'agit notamment d'une détection de présence alors que le mode de programmation en cours est le mode économique et d'une absence de détection de présence alors que le mode de programmation est le mode de confort. Le thermostat est alors commandé en mode de confort ou économique, selon, respectivement, la présence ou l'absence détectée par le capteur de présence.

Dans le cas où la programmation avec auto-apprentissage est activée, le chauffage électrique fonctionne selon les étapes suivantes.

Dans un premier temps, on détermine le nombre de détections de présence enregistrées par le capteur de présence durant un intervalle de temps prédéterminé, appelé « pas d'horloge ». La durée de ce pas d'horloge peut par exemple être égale à 15 minutes. De préférence, les pas d'horloge, durant lesquels la détection de présence est réalisée, correspondent au pas de programmation, sur lesquels les lois de programmation sont définies, pour pouvoir adapter au mieux la loi de programmation à la présence effectivement déterminée d'un utilisateur.

Ensuite, le microcontrôleur 24 compare le nombre de détections de présence enregistrées à un seuil de nombre de détections prédéterminé.

Cette comparaison à un seuil prédéterminé permet de fiabiliser la détection de présence d'un utilisateur, notamment en cas de perturbations. Si le nombre de détections enregistrées est supérieur au seuil de nombre de détections prédéterminé, alors on détermine qu'un utilisateur est présent durant ce pas d'horloge. Dans le cas contraire, on détermine une absence d'utilisateur durant ce pas d'horloge.

Le microcontrôleur 24 compare alors ce résultat de présence ou d'absence d'utilisateur au mode de chauffage commandé par la programmation durant le pas de programmation correspondant.

Si la comparaison est cohérente - c'est-à-dire qu'une absence d'utilisateur est déterminée alors que la programmation commande un chauffage en mode économique ou qu'une présence d'utilisateur est déterminée alors que la programmation commande un chauffage en mode de confort - alors la loi de programmation n'est pas modifiée. On recommence alors à compter les détections durant le pas d'horloge suivant.

Dans le cas contraire, où la comparaison est incohérente - c'est-à-dire qu'une absence d'utilisateur est déterminée alors que la programmation commande un chauffage, par exemple, en mode de confort ou différent du mode économique ou qu'une présence d'utilisateur est déterminée alors que la programmation commande un chauffage, par exemple, en mode économique ou différent du mode confort - alors le microcontrôleur 24 modifie la loi de programmation enregistrée dans la mémoire de l'unité de mémoire de programmation. La modification de loi de programmation porte sur le pas d'horloge, durant lequel la comparaison incohérente a été réalisée, du prochain cycle de la loi de programmation. La modification peut porter sur le mode de chauffage et/ou la température de consigne du corps chauffant. Cette modification de la loi de programmation vise de préférence à faire tendre le mode de fonctionnement du corps de chauffe vers le mode de fonctionnement adapté à la présence ou à l'absence effectivement détectée d'un utilisateur. En particulier, la modification peut porter sur la température de consigne du thermostat, pour rapprocher ce dernier de la température à laquelle il aurait dû être. La valeur de modification peut alors être fixe, par exemple 1°C par 1°C. Selon une variante, la modification est pondérée selon la routine décrite ci-dessous.

Pour mettre en oeuvre cette routine, l'écart entre les températures de consigne économique et de confort est subdivisé en un nombre prédéterminé de seuils de températures intermédiaires. Les intervalles de température entre deux seuils de températures intermédiaires successifs, qui peuvent être soit constants soit variables, sont appelés des « pas d'ajustement ».

Le microcontrôleur 24 enregistre dans la mémoire le nombre de modifications successives apportées sur un même pas d'horloge de cycles successifs, dans « le même sens », appelé « indice de récurrence ». En d'autres termes, cet indice de récurrence est le nombre de modifications successives apportées sur un même pas d'horloge visant toutes soit une augmentation soit une diminution de la température de consigne selon la loi de programmation pour adapter cette température de consigne au fonctionnement effectif du corps de chauffe.

On définit un paramètre, fixe ou modifiable par l'utilisateur, appelé « vitesse d'apprentissage ». Dans la suite, on fixe cette vitesse d'apprentissage égale à 2.

En cas de modification par le calculateur de la loi de programmation enregistrée dans la mémoire, du fait d'une discordance ou incohérence entre la température de consigne programmée et la détection de la présence effective de l'utilisateur, la loi de programmation sur ce pas de programmation est modifiée d'une valeur d'ajustement égale à l'indice de récurrence fois la vitesse d'apprentissage.

Les figures 2 à 5 illustrent un exemple de modification d'une loi de programmation du chauffage représenté à la figure 1.

En bas de ces figures 2 à 5, les signaux fournis par un détecteur de présence d'un utilisateur sont représentés en fonction de l'heure. Une barre verticale indique qu'un utilisateur est détecté alors que l'absence d'une telle barre indique qu'aucun utilisateur n'est détecté.

Par ailleurs, la température de consigne de l'installation de chauffage selon un exemple de procédé de programmation, en fonction de l'heure de la journée est représentée en trait plein. La température de consigne de l'installation de chauffage en fonction de la présence d'un utilisateur est également représentée en traits pointillés, sur ces figures.

Dans cet exemple, la température de consigne varie entre une température de confort T_{C} adaptée à la présence d'un utilisateur, et une température économique T_{eco}, qui est inférieure à la température de confort T_{C} et adaptée à l'absence de l'utilisateur. En d'autres termes, cette température économique T_{eco} permet de réaliser des économies d'énergie par rapport à la température de confort T_{C}, tout en assurant un chauffage de la pièce pour éviter un trop grand abaissement de la température dans celle-ci. Un trop grand abaissement de la température dans la pièce augmenterait l'inertie du chauffage de la pièce.

Sur les figures 2 à 5 :
- les courbes 30₁, 30₂, 30₃, 30₄ indiquent la consigne enregistrée dans l'unité mémoire selon une loi de programmation que l'on adapte à l'utilisation effective du chauffage électrique 10,
- les courbes 32₁, 32₂, 32₃, 32₄ indiquent la consigne effectivement fournie au thermostat, et
- les courbes 34₁, 34₂, 34₃, 34₄ indiquent la température effectivement mesurée dans la pièce chauffée au moyen du chauffage électrique 10.

Sur toutes les figures 2 à 5, le rythme de vie est constant, c'est-à-dire que les pas d'horloge sur lesquels une présence d'un utilisateur, respectivement une absence d'un utilisateur, est détectée sont identiques d'une figure à l'autre.

Les courbes 32₁, 32₂ et 32₃ diffèrent des courbes 30₁, 30₂ et 30₃ du fait que, dans l'exemple, il est donné priorité au capteur de présence. En d'autres termes, dans le cas où la loi de programmation enregistrée 30₁, 30₂, 30₃ indique une température de consigne distincte de la température de confort T_{C} alors que le capteur de présence détecte la présence d'un utilisateur sur un pas d'enregistrement, alors la température de consigne effectivement fournie au thermostat sur ce pas d'enregistrement est égale à la température de confort T_{C}. En outre, toujours dans ce cas, la température de consigne effectivement fournie au thermostat, au pas de programmation suivant, est également égal à la température de confort T_{C}. Une telle temporisation permet de ne pas refroidir la pièce trop rapidement alors qu'un utilisateur peut y revenir.

L'exemple des figures 2 à 5 illustre plus particulièrement l'adaptation d'une loi de programmation à :
- un départ plus tardif que ce qui est prévu initialement dans la loi de programmation (départ à 9h30 au lieu de 9h) ;
- une arrivée plus précoce que ce qui est prévu initialement dans la loi de programmation (arrivée à 11h30 au lieu de 12h) ; et
- un départ plus tôt que ce qui est prévu initialement dans la loi de programmation (départ à 12h30 au lieu de 13h).

Dans cet exemple, les valeurs numériques suivantes ont été choisies :
- durée d'un pas d'horloge : 15 minutes,
- durée d'un pas de programmation : 15 minutes,
- nombre de pas d'ajustement : 8,
- pas d'ajustement : 0,5°C,
- vitesse d'apprentissage : 2, et
- temporisation : 0,5 h.

Sur les figures, on a représenté huit niveaux de température intermédiaires entre la température économique T_{eco}, en l'espèce 16°C, et la température de confort T_{C}, en l'espèce 20°C. Ces niveaux intermédiaires sont donc deux à deux distants d'un pas d'ajustement. Cependant, seuls deux niveaux de températures intermédiaires sont référencés T₁ et T₂, respectivement. Il va de soi que le nombre de niveaux de température intermédiaires ne doit pas être compris comme étant limitatif, ce nombre ayant été choisi uniquement à fin de simplicité et de clarté de l'exposé qui va suivre.

En l'espèce, l'intervalle entre deux niveaux de température intermédiaires est constant. Il pourrait cependant également être variable afin de moduler l'adaptation de la loi de programmation en fonction de l'indice de récurrence.

La figure 2 illustre la situation initiale.

La loi de programmation préenregistrée 30₁ indique une température de consigne égale à la température de confort T_{C} durant des plages horaires prédéfinies en usine ou par l'utilisateur. Ainsi la température de consigne selon la loi de programmation 30₁ est égale à la température de confort T_{C} entre 8h00 à 9h00 et entre 12h et 13h30. La température de consigne selon cette loi de programmation 30₁ est cependant égale à la température économique T_{eco} entre 9h à 12h.

Cependant, une présence d'un utilisateur est détectée entre 8h et 9h30, ainsi qu'entre 11h30 et 12h30.

Par conséquent, la température de consigne 32₁ effectivement fournie au thermostat, en tenant compte de la détection effective de la présence d'un utilisateur et d'une temporisation comme évoqué plus haut, est égale à la température de confort T_{C} entre 8h et 10h et entre 11h30 et 13h, et à la température économique T_{eco} entre 10h et 11h30 et après 13h. En particulier, la température de consigne effectivement appliquée au thermostat durant l'intervalle de temps entre 9h30 et 10h est la température de confort T_{C}, alors qu'aucun utilisateur n'est détecté durant cet intervalle de temps.

Par ailleurs, l'unité d'auto-apprentissage enregistre cette présence d'un utilisateur durant les pas d'horloge de 9h00 à 9h15 et de 9h15 à 9h30, ainsi qu'entre 11h30 et 11h45, et entre 11h45 et 12h00. L'unité d'auto-apprentissage en déduit une discordance, sur ces pas d'horloge, entre la loi de programmation enregistrée et la détection de présence d'un utilisateur.

Par ailleurs, la température dans la pièce est inférieure à la température de confort entre 11h30 et 12h alors qu'un individu s'y trouve. Cette situation est identique à ce qui est rencontré quand le chauffage est commandé uniquement en fonction de la présence d'un utilisateur.

L'unité d'auto-apprentissage enregistre également l'absence d'un utilisateur entre 12h30 et 12h45, et entre 12h45 et 13h. L'unité d'auto-apprentissage en déduit une discordance, sur ces pas d'horloge, entre la loi de programmation enregistrée et la détection de présence d'un utilisateur.

Selon cet exemple, l'unité d'auto-apprentissage modifie la loi de programmation enregistrée sur les pas d'horloge où une discordance a été déterminée.

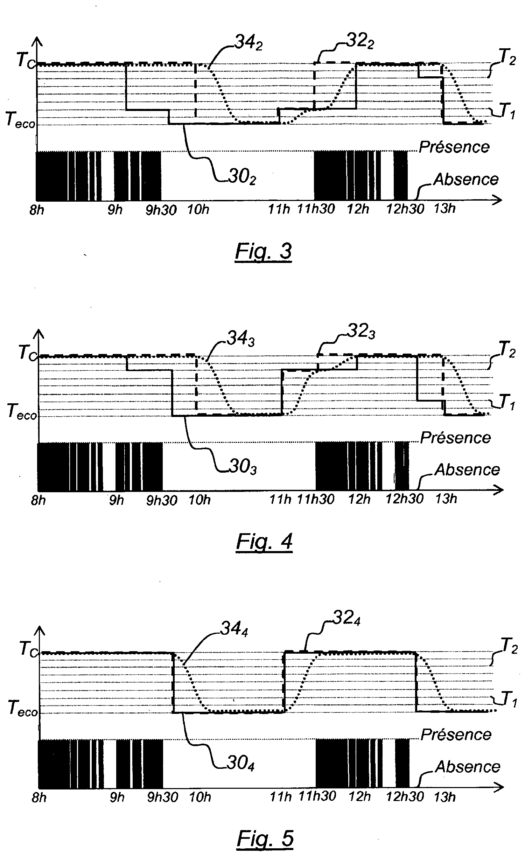

La loi de programmation est modifiée de telle sorte que la température de consigne est diminuée dans le cas où aucun utilisateur n'a été détecté, et augmentée dans le cas où un utilisateur a été détecté. Plus précisément, la température de consigne de loi de programmation est augmentée, respectivement diminuée, sur ces pas d'horloge, de deux pas d'ajustement puisque la vitesse d'apprentissage est égale à 2 et que l'indice de récurrence est égal à 1 à cette étape. On obtient ainsi la loi de programmation 30₂ représentée à la figure 3 où la température de consigne est égale à :
- la température intermédiaire basse T₁ entre 9h et 9h30 et entre 11h et 12h, et à
- la température intermédiaire haute T₂ ente 12h30 et 13h.

En particulier, il est à noter que, selon la loi de programmation 30₂, la température de consigne est égale à la température intermédiaire basse T₁ entre 11h et 11h30, c'est-à-dire sur des pas d'horloge où aucun utilisateur n'a été détecté au cycle précédent. En d'autres termes, la présence d'un utilisateur est anticipée par la loi de programmation, par rapport à la détection intervenue au cycle précédent, d'une demi-heure. La durée d'anticipation indiquée ici est uniquement illustrative. Cependant, de manière préférée, cette durée d'anticipation est inférieure ou égale à la temporisation du capteur de présence, pour éviter que le chauffage ne repasse en mode de chauffage économique avant l'arrivée d'un utilisateur.

La loi de programmation indique ainsi une température de consigne égale à la température intermédiaire basse T₁ de manière anticipée par rapport à la détection effective d'un utilisateur au cycle précédent. Ceci permet de « préchauffer » la pièce à cette température intermédiaire basse T₁ pour améliorer le confort de l'utilisateur à son arrivée.

L'unité d'auto-apprentissage est programmée pour ne pas reconnaître comme une discordance ce mode de fonctionnement « de préchauffage » avec le fait qu'aucune présence d'utilisateur n'est effectivement détectée sur ces pas d'horloge.

En outre, l'unité électronique de choix est programmée pour donner la priorité à la consigne de la loi de programmation sur ces pas de programmation de préchauffage par rapport au détecteur de présence. Ainsi, la température de consigne effectivement appliquée est la température T₁ et non la température T_{eco}.

Cependant, comme le rythme de vie est identique sur la figure 3 par rapport à la figure 2, les mêmes discordances vont être déterminées à cette seconde étape qu'à la première étape. Par conséquent, la loi de programmation va être modifiée sur les mêmes pas d'horloge. Il est à noter ici que l'unité d'auto-apprentissage n'enregistre pas comme discordance le fait que la loi de programmation 30₂ indique une température de consigne égale à la température intermédiaire basse T₁ entre 11h et 11h30 alors qu'aucun individu n'est détecté. En effet, cette valeur de consigne vise à anticiper l'arrivée d'un utilisateur afin que la pièce soit chauffée à ce moment-là.

Ici, cependant, comme une même discordance est déterminée pour la deuxième fois consécutivement, la modification de la consigne va être plus grande.

Plus précisément, à cette deuxième étape, la température de consigne de la loi de programmation est augmentée, respectivement diminuée, sur ces pas de programmation, de quatre pas d'ajustement puisque la vitesse d'apprentissage est égale à 2 et que l'indice de récurrence est désormais égal à 2. On obtient ainsi la loi de programmation 30₃ de la figure 4. Cette loi de programmation 30₃ anticipe également l'arrivée d'un utilisateur à 11h30 en indiquant une température de consigne égale à la température intermédiaire haute T₂ entre 11h et 11h30, de manière que la température dans la pièce ait atteint la température intermédiaire haute T₂ à 11h30, heure prévue d'arrivée de l'utilisateur dans la pièce.

On considère, encore une fois, que le rythme de vie est identique au cycle suivant illustré à la figure 4. Les mêmes discordances vont donc être déterminées à cette troisième étape et la loi de programmation va être modifiée sur les mêmes pas de programmation. Là encore, l'unité d'auto-apprentissage n'enregistre aucune discordance sur les pas de programmation 11h-11h15 et 11h15-11h30. En effet, la consigne selon la loi de programmation sur ces pas de programmation vise à anticiper l'arrivée d'un utilisateur. En outre, la température de consigne effectivement appliquée sur ces pas de programmation est égale à la température intermédiaire supérieure T₂, priorité étant donnée, sur ces pas de programmation, à la loi de programmation par rapport au détecteur de présence d'un utilisateur.

Les mêmes discordances sont cependant déterminées pour la troisième fois consécutivement, de sorte que la modification de la loi de programmation devrait être plus importante. Ici cependant, vu le nombre de niveaux intermédiaires définis, les nouvelles modifications de la loi de programmation aboutissent à la température de confort T_{C} dans le cas d'une présence d'un utilisateur, et à la température économique T_{eco} dans le cas d'une absence d'un utilisateur. On aboutit ainsi à la loi de programmation 30₄ de la figure 5, parfaitement adaptée au rythme de vie des utilisateurs. En particulier, on note que du fait qu'aucune discordance n'est déterminée sur les pas de programmation entre 9h15 et 9h30, il n'y a pas de temporisation de la consigne à sa valeur de confort T_{C} entre 9h30 et 10h comme cela était illustré sur les figures 2 à 4. Ainsi, on ne chauffe plus la pièce dès 9h30, heure du départ de l'utilisateur, ce qui constitue une économie d'énergie.

En outre, on remarque que grâce à l'anticipation de cette loi de programmation 30₄ entre 11h et 11h30, la température 34₄ dans la pièce a atteint la température de confort à 11h30, heure d'arrivée de l'utilisateur. Le confort de l'utilisateur est ainsi amélioré par rapport à une commande du chauffage uniquement en fonction de la présence détectée d'un utilisateur, selon laquelle le chauffage n'aurait commencé à chauffer qu'à partir de l'arrivée effective de l'utilisateur. Grâce à l'auto-apprentissage, il est donc possible d'anticiper l'inertie du corps de chauffe et du chauffage d'un local par l'installation de chauffage électrique.

En l'espèce, l'anticipation par la loi de programmation de l'arrivée d'un utilisateur est fixée à deux pas de programmation, c'est-à-dire que l'anticipation est réalisée sur un intervalle de temps prédéterminé.

Selon une première variante, la modification de la loi de programmation anticipe l'utilisation de l'installation par l'utilisateur d'une période de temps paramétrable par l'utilisateur. En d'autres termes, l'utilisateur règle à l'usage le temps de préchauffe nécessaire pour atteindre la température de confort dans la pièce.

Selon une autre variante, le chauffage électrique détermine la période d'anticipation par auto-apprentissage, au moyen de la sonde de température ambiante. Par exemple, la loi de programmation commande une anticipation sur un nombre de pas de programmation et détermine au moyen de la sonde si la température ambiante a atteint la valeur prescrite par la loi de programmation à l'arrivée d'un utilisateur. Dans le cas où la température ambiante n'a pas atteint la valeur prescrite par la loi de programmation, la loi de programmation est modifiée pour anticiper l'arrivée d'un utilisateur en indiquant une température de consigne différente de la température économique sur un plus grand nombre de pas de programmation.

Au contraire, si la sonde de température ambiante détermine que la température ambiante a atteint la valeur prescrite trop tôt, c'est-à-dire au moins un pas d'horloge avant l'arrivée d'un utilisateur, alors la loi de programmation est modifiée pour indiquer une température de consigne différente de la température économique sur un plus petit nombre de pas de programmation.

En outre, la loi de programmation peut également être associée à une temporisation à la fin des intervalles de temps où elle indique une température de consigne différente de la température économique. Ainsi, si l'utilisateur part un peu plus tard que d'habitude, il ne ressentira pas une baisse de la température.

Bien entendu, la présente invention n'est pas limitée aux exemples et au mode de réalisation décrits et représentés, mais elle est susceptible de nombreuses variantes accessibles à l'homme de l'art.

Ainsi l'invention trouve à s'appliquer dans de nombreux domaines.

Par exemple, on peut mettre en oeuvre le procédé qui vient d'être décrit dans un système de climatisation, le fonctionnement du climatiseur étant programmé selon une loi modifiable comme cela vient d'être décrit, en fonction de la présence d'un utilisateur dans le local à climatiser.

Il est également possible de mettre en oeuvre le procédé qui vient d'être décrit dans un système de chauffe-eau.

Dans le cas où le chauffe-eau met en oeuvre une résistance chauffante pour chauffer l'eau, le fonctionnement de cette dernière pourra être programmé comme cela vient d'être décrit, la loi de programmation étant modifiée en fonction de l'utilisation effective du chauffe-eau.

Le chauffe-eau peut cependant être un chauffe-eau dit thermodynamique, c'est-à-dire un chauffe-eau récupérant des calories d'un flux d'air pour chauffer de l'eau au moyen d'un circuit thermodynamique d'échange de calorie. Ce circuit thermodynamique comprend classiquement :
- un évaporateur où l'air perd des calories au profit d'un fluide frigorigène ou caloporteur ;
- un compresseur qui permet entre autre de mettre en circulation le fluide frigorigène ou caloporteur dans le circuit thermodynamique ; et
- un condenseur dans lequel le fluide frigorigène ou caloporteur cède des calories à l'eau à chauffer.

Le chauffe-eau thermodynamique peut comporter un ventilateur pour diriger le flux d'air en direction de l'évaporateur.

Dans ce cas, on peut programmer le fonctionnement du ventilateur et/ou du compresseur comme cela vient d'être décrit, la loi de programmation pouvant être modifiée en fonction de l'utilisation effective du chauffe-eau.

Dans le cas d'un chauffe-eau, on peut également programmer une température d'eau de consigne ou une quantité d'eau chaude de consigne en fonction de l'utilisation de l'installation de chauffe-eau par l'utilisateur. En particulier, on peut détecter l'utilisation de l'installation de chauffe-eau en détectant ou en mesurant une quantité d'eau soutirée du chauffe-eau.

Dans le cas d'un chauffe-eau, on peut également commander le chauffage d'une quantité d'eau fonction de l'utilisation effective du chauffe-eau. La loi de programmation de la quantité d'eau à chauffer sera alors modifiable comme cela vient d'être décrit.

L'invention trouve également à s'appliquer dans le domaine de la ventilation.

Notamment, dans un système de ventilation mécanique contrôlée (VMC), simple ou double flux, on peut programmer le fonctionnement du moto-ventilateur, d'un moto-ventilateur ou des moto-ventilateurs comme cela a été décrit ci-avant. Dans ce cas, on peut modifier la loi de programmation du fonctionnement du moto-ventilateur en fonction de l'utilisation par un utilisateur. La consigne vise alors le débit, la pression, la puissance, la vitesse de rotation, l'intensité du courant d'alimentation du moto-ventilateur ou une combinaison de ces paramètres. Ceci est particulièrement intéressant dans le cas où l'un au moins des réseaux de ventilation du système de VMC débouche dans un local à ventiler à travers un terminal modulant le débit en fonction, par exemple, d'un taux d'hygrométrie du local, d'une quantité de CO₂ ou de composés organiques volatils (COV) présents dans le local.

Le débit peut également être modulé directement en fonction d'une commande actionnée par l'utilisateur. Cela est notamment le cas d'une « bouche cuisine » dont l'utilisateur peut commander pour qu'un grand débit soit extrait de la cuisine pendant les phases de cuisson.

## Revendications

1. Procédé de contrôle d'une installation (10), le procédé comprenant les étapes de :
- détermination d'une loi de programmation (30_1) d'un dispositif (12) de l'installation (10) sur un cycle de fonctionnement, le dispositif étant adapté à fonctionner au cours du cycle selon des modes de fonctionnement actif (T_{C}), adapté à l'utilisation de l'installation par un utilisateur, et de veille (T_{eco}), adapté à l'absence d'utilisation de l'installation (10) par l'utilisateur ;
- comparaison du fonctionnement du dispositif (12) selon la loi de programmation avec l'utilisation effective de l'installation (10) par l'utilisateur,
- détermination d'une discordance entre la consigne (30₁) donnée par la loi de programmation du dispositif et l'utilisation effective de l'installation par l'utilisateur ; et
- modification de la loi de programmation (30₁) du dispositif (12) en fonction de l'utilisation effective de l'installation (10) par l'utilisateur, l'utilisation effective du dispositif étant détectée au moyen d'un détecteur de présence de l'utilisateur, la modification de la loi de programmation anticipant l'utilisation de l'installation (10) par l'utilisateur d'une période déterminée par l'installation elle-même, par auto-apprentissage.

2. Procédé selon la revendication 1, dans lequel la loi de programmation commande le dispositif (12) selon des modes de fonctionnement intermédiaires (T₁ ; T₂) entre le mode actif et le mode de veille.

3. Procédé selon la revendication 2, dans lequel l'adaptation faite à la loi de programmation est fonction du nombre de cycles successifs pendant lesquels une même discordance a été déterminée.

4. Procédé selon l'une quelconque des revendications précédentes, dans lequel la loi de programmation est fonction du jour de la semaine.

5. Procédé selon la revendication 4, dans lequel on détermine :
- une loi unique pour tous les jours de la semaine du lundi au dimanche, ou
- une loi de programmation unique mis en œuvre tous les jours de la semaine du lundi au vendredi, et une ou deux lois de programmation pour le samedi et le dimanche ;
- une loi de programmation distinctes pour tous les jours de le semaine du lundi au vendredi ; ou
- une loi de programmation définie sur une semaine, un mois ou une année.

6. Procédé selon l'une quelconque des revendications précédentes, dans lequel, la modification de la loi de programmation vise à corriger la discordance pour un cycle futur, de préférence pour le cycle suivant le cycle où la discordance a été déterminée.

7. Procédé selon l'une quelconque des revendications précédentes, dans lequel on détermine un intervalle de temps de présence, respectivement d'absence, d'un utilisateur, par :
i) calcul du nombre de signaux, émis par le détecteur de présence, représentatifs de la présence d'un utilisateur durant une période de temps de durée prédéterminée ;
ii) comparaison du nombre de signaux calculé à l'étape i) avec une valeur de seuil prédéterminée ;
iii) réunion de périodes de temps successives correspondant à un même résultat de la comparaison de l'étape ii).

8. Unité (14) de commande pour un dispositif (12) présentant au moins des modes de fonctionnement actif et veille, l'unité de commande étant adaptée à commander une consigne de commande du dispositif selon le procédé de l'une quelconque des revendications 1 à 7.

9. Installation (10) comprenant :
- un dispositif (12) présentant au moins des modes de fonctionnement actif et de veille ;
- une unité (14) de commande du dispositif selon la revendication 8 ;
- un détecteur de présence (18).

10. Installation (10) selon la revendication 9 comprenant un dispositif (12) présentant au moins des modes de fonctionnement actif et de veille où l'unité (14) de commande du dispositif est située à l'extérieur du dispositif (12).

11. Installation selon la revendication 9 ou 10, choisie dans le groupe comprenant :
- une installation de chauffage (10), le dispositif étant un corps chauffant (12) ;
- une installation de chauffe-eau, le dispositif étant un corps chauffant ou un compresseur de circulation d'un fluide frigorigène ;
- une installation de ventilation, le dispositif étant un ventilateur ou une bouche de ventilation ; et
- une installation de climatisation, le dispositif étant un climatiseur.

12. Installation selon l'une des revendications 9 à 11, comprenant en outre une mémoire (20) dans laquelle la loi de programmation est enregistrée.

## Patentansprüche

1. Verfahren zum Kontrollieren einer Einrichtung (10) wobei das Verfahren die folgenden Schritte umfasst:
- Bestimmen einesProgrammiergesetzes (30_1) einer Vorrichtung (12) der Einrichtung (10) auf einem Betriebszyklus, wobei die Vorrichtung ausgelegt ist, um im Laufe des Zyklus gemäß aktiven Betriebsmodi (T_{C}),ausgelegt zur Verwendung der Einrichtungdurch einen Benutzer, und einem Standby-Modus (T_{eco}), ausgelegt für die Abwesenheit der Verwendung der Einrichtung (10) durch den Benutzer, zu funktionieren;
- Vergleichen des Betriebs der Vorrichtung (12) gemäß dem Programmiergesetz mit der effektiven Verwendung der Einrichtung (10) durch den Benutzer,
- Bestimmung einer Abweichung zwischen dem Sollwert (30₁), gegeben durch das Programmiergesetz, der Vorrichtung und der effektiven Verwendung der Einrichtung durch den Benutzer; und
- Ändern des Programmiergesetzes (30₁) der Vorrichtung (12) je nachder effektiven Verwendung der Einrichtung (10) durch den Benutzer, wobei die effektive Verwendung der Vorrichtung mit Hilfe eines Detektors zum Nachweis der Anwesenheit des Benutzers detektiert wird, wobei die Änderungdes Programmiergesetzes die Verwendung der Einrichtung (10) durch den Benutzer um einen von der Einrichtung selbst bestimmten Zeitraum selbstlernend vorwegnimmt:

2. Verfahren nach Anspruch 1, wobeidas Programmiergesetz die Vorrichtung (12) gemäß Zwischen-Betriebsmodi (T₁; T₂) zwischen dem aktiven Modus und dem Standby-Modus steuert.

3. Verfahren nach Anspruch 2, wobei die Anpassung, die am Programmiergesetz vorgenommen wird,eine Funktion der Anzahl der aufeinander folgenden Zyklen ist, während der eine gleiche Abweichung bestimmt wurde.

4. Verfahren nach einem beliebigen der vorhergehenden Ansprüche, **dadurch gekennzeichnet**, dassdas Programmiergesetz eine Funktion des Tags der Woche ist.

5. Verfahren nach Anspruch 4, wobei Folgendes bestimmt wird:
- ein einziges Gesetz für alle Tage der Woche von Montag bis Sonntag, oder
- ein einziges Programmiergesetz,das alle Tage der Woche von Montag bis Freitag durchgeführt wird, und ein oder zwei Programmiergesetze für Samstag und Sonntag
- ein verschiedenes Programmiergesetz für alle Tage der Woche von Montag bis Sonntag; oder
- ein definiertes Programmiergesetz für eine Woche, einen Monat oder ein Jahr.

6. Verfahren nach einem beliebigen der vorhergehenden Ansprüche, wobei die Veränderung des Programmiergesetzes darauf abzielt, die Abweichung für einen künftigen Zyklus zu korrigieren, vorzugsweise für den Zyklus, der dem Zyklus folgt, beidem die Abweichung bestimmt wurde.

7. Verfahren nach einem beliebigen der vorhergehenden Ansprüche, wobei ein Zeitintervall der Anwesenheit bzw. der Abwesenheit eines Benutzers durch Folgendes bestimmt wird:
i) Berechnung der Anzahl der Signale,die vom Detektor der Anwesenheit ausgesendet wurden, die repräsentativ für die Anwesenheit eines Benutzers während eines Zeitraumsmit vorbetimmter Dauer sind;
ii) Vergleich der Anzahl von Signalen, berechnet in Schritt i) mit einem vorbestimmten Schwellenwert;
ii) Zusammenfassung der aufeinander folgenden Zeiträume, die einem gleichen Ergebnis des Vergleichs von Schritt ii) entsprechen.

8. Einheit (14) zur Steuerung für eine Vorrichtung (12), die mindestenseinen aktiven und einen Standby-Modus aufweist, wobei die Einheit zur Steuerung ausgelegt ist, um einen Steuersollwert der Vorrichtung gemäß dem Verfahren eines beliebigen derAnsprüche 1 bis 7 zu steuern.

9. Einrichtung (10), umfassend:
- eine Vorrichtung (12), die mindestens einen aktiven Betriebsmodus und einen Standby-Betriebsmodus umfasst;
- eine Einheit (14) zu Steuerung der Vorrichtung nach Anspruch 8.
- einen Anwesenheitsdetektor (18).

10. Einrichtung (10) nach Anspruch 9, umfassend eine Vorrichtung (12), die mindestens einen aktiven Betriebsmodus und einen Standby-Betriebsmodus umfasst, wobei sich die Einheit (14) zu Steuerung der Vorrichtung an der Außenseite der Vorrichtung (12) befindet.

11. Einrichtung (10) nach Anspruch 9 oder 10,ausgewählt aus der Gruppe, umfassend:
- eine Heizeinrichtung (10), wobei die Vorrichtung ein Heizkörper (12) ist,
- eine Wassererwärmungs-Einrichtung, wobei die Vorrichtung ein Heizkörperoderein Kompressor zur Zirkulierung einer Kühlflüssigkeit ist;
- eine Ventilationseinrichtung, wobei die Vorrichtung ein Ventilator oder eine Belüftungsöffnung ist; und
- eine Klimatisierungseinrichtung, wobei die Vorrichtung eine Klimaanlage ist.

12. Einrichtung nach einem der Ansprüche 9 bis 11, umfassendaußerdem einen Speicher (20), in dem das Programmiergesetz abgelegt ist.

## Claims

1. A method of controlling a device (10), the method comprising the following steps:
- determining a programming law (30_1) of an apparatus (12) of the device (10) over an operating cycle, the apparatus being suitable for operating during the cycle according to an active operating mode (T_{C}), adapted to the use of the device by a user, and a standby mode (T_{eco}), adapted to the absence of use of the device (10) by the user;
- comparing the operation of the apparatus (12) according to the programming law with the actual use of the device (10) by the user,
- determining a mismatch between the setpoint (30₁) given by the programming law of the apparatus and the actual use of the device by the user; and
- modifying the programming law (30₁) of the apparatus (12) based on the actual use of the device (10) by the user, the actual use of the device being detected using a presence detector detecting the presence of the user, the modification of the programming law anticipating the use of the device (10) by the user by a period determined by the device itself, by its self-learning.

2. The method according to claim 1, wherein the programming law controls the apparatus (12) according to intermediate operating modes (T₁; T₂) between the active mode and the standby mode.

3. The method according to claim 2, wherein the adaptation to the programming law depends on the number of successive cycles during which a same mismatch has been determined.

4. The method according to any one of the preceding claims, wherein the programming law depends on the day of the week.

5. The method according to claim 4, wherein one determines:
- a single law for all of the days of the week from Monday through Sunday, or
- a single programming law implemented every day of the week from Monday through Friday, and one or two programming laws for Saturday and Sunday;
- a separate programming law for every day of the week from Monday through Friday; or
- a programming law defined over a week, month or year.

6. The method according to any one of the preceding claims, wherein the modification of the programming law seeks to correct the mismatch for a future cycle, preferably for the cycle following the cycle where the mismatch was determined.

7. The method according to any one of the preceding claims, wherein a presence time interval, absence time interval, respectively, of a user is determined by:
i) calculating the number of signals, emitted by the presence detector, representative of the presence of a user during a period of time with a predetermined length;
ii) comparing the number of signals calculated in step i) with a predetermined threshold value;
iii) uniting successive periods of time corresponding to a same result of the comparison of step ii).

8. A control unit (14) for a device (12) having at least active and standby operating modes, the control unit being suitable for controlling a control setpoint of the apparatus according to the method of any one of claims 1 to 7.

9. A device (10) comprising:
- an apparatus (12) having at least active and standby operating modes;
- a control unit (14) for the device according to claim 8;
- a presence detector (18).

10. The device (10) according to claim 9, comprising an apparatus (12) having at least active and standby operating modes where the control unit (14) of the apparatus is situated outside the apparatus (12).

11. The device according to claim 9 or 10, chosen from the group comprising:
- a heating device (10), the apparatus being a heating body (12);
- a water heater device, the apparatus being a heating body or a circulation compressor for a coolant;
- a ventilation device, the apparatus being a fan or a fan mouth; and
- an air-conditioning device, the apparatus being an air-conditioner.

12. The device according to one of claims 9 to 11, further comprising a memory (20) in which the programming law is saved.
